Europäisches Patentamt

European Patent Office

Office européen des brevets

(19)

(11) Numéro de publication : **0 045 271 B1**

(12) **FASCICULE DE BREVET EUROPÉEN**

(45) Date de publication du fascicule du brevet :
26.06.85

(51) Int. Cl.⁴ : **G 02 B 6/38**

(21) Numéro de dépôt : **81401237.3**

(22) Date de dépôt : **30.07.81**

(54) **Connecteur pour fibres optiques.**

(30) Priorité : **30.07.80 FR 8016817**

(43) Date de publication de la demande :
**03.02.82 Bulletin 82/05**

(45) Mention de la délivrance du brevet :
**26.06.85 Bulletin 85/26**

(84) Etats contractants désignés :
**DE GB NL SE**

(56) Documents cités :
**EP-A- 0 010 505**
**FR-A- 2 335 859**
**GB-A- 1 458 896**
**US-A- 3 902 784**
**US-A- 4 113 346**
**Wire Industry Vol. 46 - No. 9, Sept. 79, pages 637-40**
**Electronics Letters, Vol. 10, No. 14, juillet 1974, pages 280-81**

(73) Titulaire : **RADIALL INDUSTRIE, Société Anonyme dite:**
**101, rue Philibert Hoffmann Zone Industrielle Ouest F-93116 Rosny-Sous-Bois (FR)**

(72) Inventeur : **Despouys, Jean-Bernard**
**4, rue Frédéric Mistral**
**F-75015 Paris (FR)**

(74) Mandataire : **Nony, Michel**
**29, rue Cambacérès**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**0 045 271**

**Description**

La présente invention concerne un connecteur pour fibres optiques.

Actuellement la connexion bout à bout de deux fibres optiques est généralement réalisée au moyen de connecteurs formés de deux embouts mâles cylindriques montés aux extrémités de chacune des fibres et d'un raccord femelle comportant un perçage cylindrique pour supporter et aligner les deux embouts face à face.

On sait que pour obtenir une bonne connexion à faibles pertes, il est nécessaire que le connecteur aligne parfaitement les deux fibres, et que l'intervalle entre les deux extrémités des fibres soit minimum. Si l'agencement rappelé ci-dessus est satisfaisant pour connecter entre elles de grosses fibres ayant, par exemple, un diamètre de cœur supérieur à 200 microns avec des pertes à la connexion voisines de 2 dB, il ne peut être mis en œuvre pour connecter des fibres telles que celles utilisées dans le domaine des télécommunications ayant un diamètre de cœur inférieur à 200 microns avec des pertes inférieures à 0,5 dB.

En effet, on peut montrer que pour atteindre cet objectif, il faut que le connecteur assure que le mésalignement entre fibres est inférieur à 4 microns. L'expérience montre que même des pièces cylindriques rectifiées ne permettent pas d'y parvenir du fait du cumul des tolérances intervenant sur l'alignement des fibres.

On connaît d'après le brevet US.A 3 902 784 un connecteur pour fibres optiques, comportant un raccord femelle tubulaire dans lequel sont ménagées deux surfaces planes formant un dièdre rentrant, deux embouts mâles ayant chacun une surface extérieure au moins partiellement cylindrique, susceptibles d'être engagés dans le raccord femelle et portant chacun l'extrémité d'une fibre optique, et des moyens d'appui pour appliquer la partie cylindrique de ladite surface extérieure de chacun desdits embouts sur les deux surfaces planes formant dièdre rentrant du raccord femelle, avec l'axe de ladite partie cylindrique sensiblement parallèle à l'arête du dièdre.

Si un tel connecteur donne généralement satisfaction en laboratoire où l'on peut utiliser des pièces de haute précision en ce qui concerne l'angle et la planéité des faces des dièdres, il ne peut être utilisé pour des fabrications en grandes séries à des prix de revient modérés du fait des techniques complexes et coûteuses nécessaires pour obtenir ces pièces de haute précision.

A titre d'exemple, on peut en effet montrer qu'un excentrement entre fibres connectées inférieur à 4 microns avec des embouts de 3 millimètres de côté, nécessite une planéité des faces des dièdres inférieure à 0,5 micron, et une ouverture des dièdres précise à 2,5 minutes d'angle près.

La présente invention vise à pallier ces inconvénients en fournissant un connecteur de haute précision dont les tolérances d'exécution sont néanmoins compatibles avec les procédés classiques de fabrication utilisés par exemple en matière de connecteurs électriques.

A cet effet, la présente invention a pour objet selon un premier mode de réalisation un connecteur pour fibres optiques du type mentionné ci-dessus comme connu d'après le document US.A 3 902 784 et qui est caractérisé par le fait que lesdits moyens d'appui comprennent, d'une part, un organe élastique longitudinal solidaire de chacun desdits embouts mâles et faisant saillie de la surface extérieure de ces embouts, et, d'autre part, une rainure longitudinale ménagée dans le raccord femelle de manière diamétralement opposée à l'arête du dièdre formé par lesdites surfaces planes, ledit organe élastique de chacun desdits embouts mâles coopérant avec ladite rainure dudit raccord femelle en venant s'engager dedans, afin d'assurer le positionnement angulaire de l'embout mâle respectif par rapport au dièdre du raccord femelle.

L'invention a également pour objet selon un second mode de réalisation un connecteur pour fibres du type mentionné et qui est caractérisé par le fait que lesdits moyens d'appui comprennent, d'une part, deux organes élastiques longitudinaux solidaires du raccord femelle, s'étendant chacun sur sensiblement la moitié du raccord femelle, de manière diamétralement opposée à l'arête dudit dièdre rentrant, et d'autre part, un méplat longitudinal formé sur chacun desdits embouts mâles, opposé à ladite surface cylindrique, chacun desdits organes élastiques coopérant avec le méplat correspondant en venant s'appliquer dessus, afin d'assurer le positionnement angulaire de l'embout mâle respectif par rapport au dièdre du raccord femelle.

Ce second mode de réalisation peut être mis en œuvre de façon particulièrement économique en réalisant les organes élastiques sous forme de ressorts à lames, les deux surfaces du raccord femelle étant réalisées dans une tôle découpée et pliée.

Avantageusement, chaque embout comporte un conduit dans lequel la fibre optique peut être introduite avec jeu et scellée.

Ce conduit est par exemple un perçage réalisé sensiblement sur l'axe de la partie cylindrique de la surface extérieure de l'embout mâle.

On montre, à titre d'exemple, qu'avec une fibre de diamètre égal à 0,1 millimètre, un embout de 4,10 millimètres de diamètre à 0,02 millimètre près, un angle dièdre égal à 110 degrés à 0,5 degré près, et un positionnement angulaire de l'embout dans le raccord à 5 degrés près on obtient un mésalignement maximum entre les deux fibres connectées égal à 1,1 micron.

On constate expérimentalement avec des fibres de 50 microns de diamètre de cœur et 100 microns

2

de diamètre extérieur connectées à l'aide d'un dispositif aux dimensions ci-dessus, que l'on obtient des pertes à la connexion de l'ordre de 0,2 dB.

Ces pertes sont tout à fait satisfaisantes et, compte tenu des tolérances demandées, les éléments du connecteur peuvent être réalisés sur des machines classiques de tournage et de fraisage.

Pour la réalisation des connecteurs tels que décrits ci-dessus, on peut mettre en œuvre un procédé du type de celui connu d'après le brevet GB.A 1 458 896 ou d'après le brevet EP.A 0 010 505. A cet effet, on dispose un embout mâle avec la partie cylindrique de sa surface extérieure maintenue en appui et orientée angulairement sur deux premières surfaces d'un gabarit formant un dièdre rentrant sensiblement de même valeur que celui du raccord femelle, on dispose dans le conduit de cet embout une fibre optique avec la surface cylindrique de son extrémité maintenue sur deux autres surfaces du gabarit parallèles respectivement aux deux premières surfaces et, on scelle la fibre optique dans le conduit.

Avantageusement, lesdites autres surfaces sont espacées desdites premières surfaces d'une distance sensiblement égale au rayon de la partie cylindrique de la surface extérieure de l'embout diminué du rayon de la gaine optique de la fibre.

Ainsi, le seul élément de haute précision intervenant dans la réalisation d'un connecteur selon l'invention en utilisant le procédé ci-dessus est la distance entre les plans parallèles des dièdres du gabarit. Cette difficulté peut être aisément surmontée en utilisant par exemple des cales étalons d'épaisseur qui permettent de garantir cette distance avec une tolérance inférieure à 0,2 micron.

Les deux modes de réalisation de l'invention décrits ci-dessus seront maintenant décrits à titre d'exemples non limitatifs en référence au dessin schématique annexé dans lequel :

La figure 1 est une vue partielle en coupe longitudinale d'un connecteur selon le premier mode de réalisation de l'invention,

la figure 2 est une vue en coupe selon la ligne II-II de la figure 1,

la figure 3 est une vue en perspective du connecteur dans une configuration ouverte,

la figure 4 est une vue partielle en coupe longitudinale d'un connecteur selon le deuxième mode de réalisation de l'invention,

la figure 5 est une vue en coupe selon la ligne V-V de la figure 4,

la figure 6 est une vue en perspective d'un élément du connecteur des figures 4 et 5,

la figure 7 illustre schématiquement un procédé de réalisation de connecteurs selon l'invention, les moyens d'orientation angulaire n'étant pas représentés, et la figure 8 est une représentation des tolérances intervenant sur l'alignement des fibres.

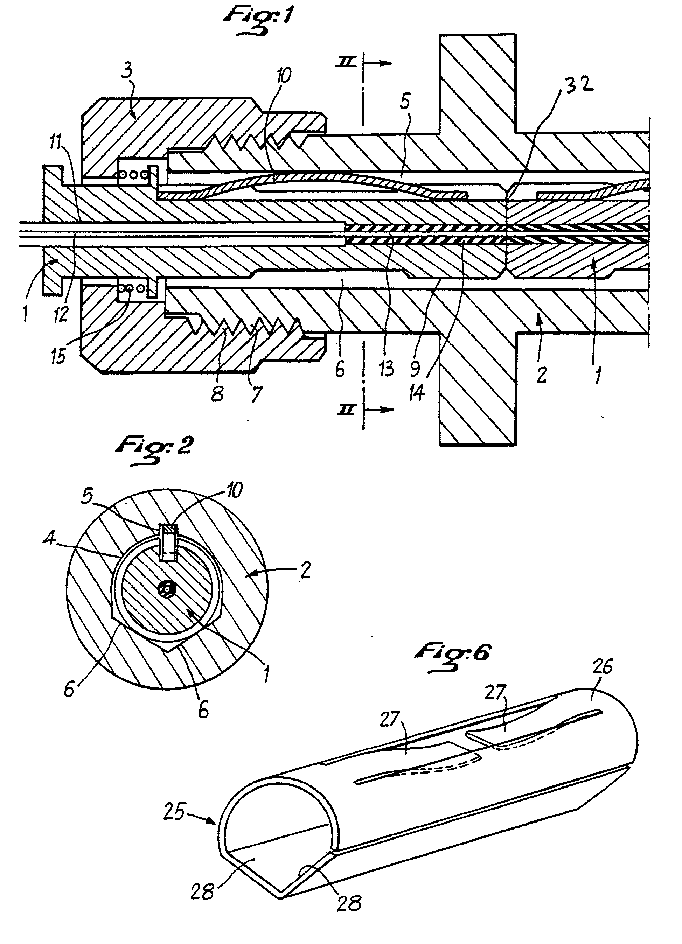

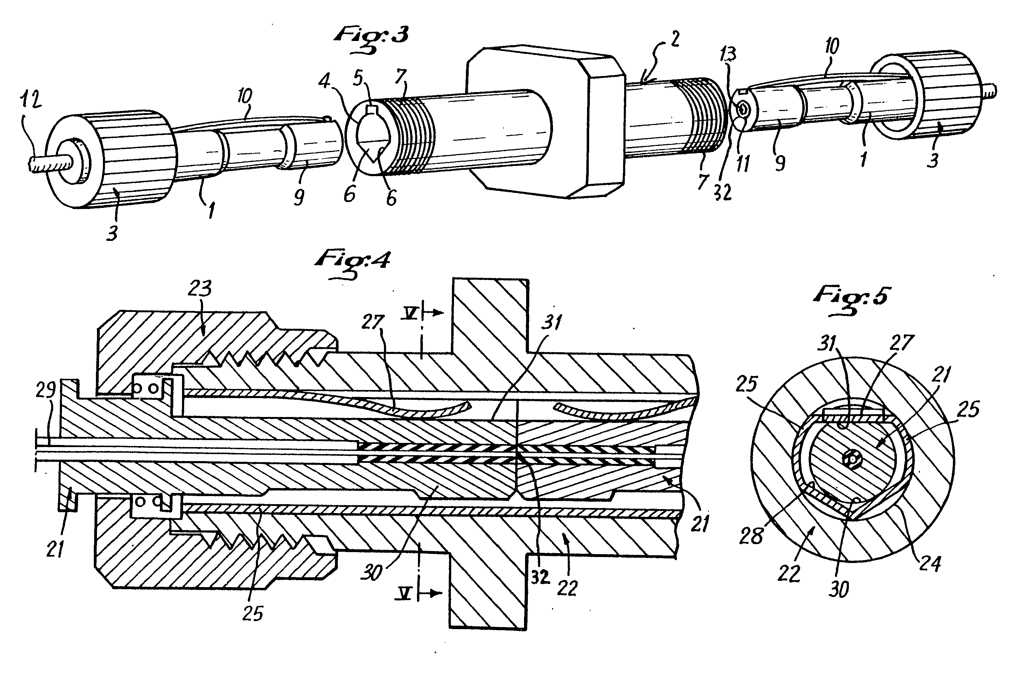

Le connecteur représenté aux figures 1 à 3 comporte d'une manière générale deux embouts mâles 1 disposés dans un raccord femelle 2 où ils sont verrouillés à l'aide de bagues de verrouillage 3.

Le raccord 2 est percé d'un orifice comportant une partie cylindrique 4, dans laquelle est formée une rainure 5 et deux surfaces planes 6 formant un dièdre rentrant.

Aux deux extrémités du raccord 2 sont par ailleurs formés des filetages extérieurs 7, susceptibles de coopérer avec des filetages intérieurs 8 des bagues de verrouillage 3.

Chaque embout 1 comporte une surface sensiblement cylindrique 9 susceptible de s'engager dans l'orifice du raccord femelle.

Les embouts 1 comportent également un ressort 10, qui lorsque la partie cylindrique 9 s'engage dans l'orifice du raccord 2, s'engage dans la rainure 5 et assure ainsi d'une part l'orientation angulaire de l'embout 1 dans le raccord 2 et d'autre part, exerce une force de pression transversale susceptible d'appliquer la surface cylindrique 9 de l'embout 1 sur les surfaces planes 6 du raccord 2.

Chaque embout 1 comporte par ailleurs un perçage longitudinal 11 ménagé dans l'axe de la partie cylindrique 9. Une fibre optique 12 dont la gaine optique 13 est dénudée à son extrémité a un diamètre inférieur à celui du perçage 11, et est scellée dans ce perçage à l'aide d'une résine polymérisable 14. Enfin un ressort de compression 15 est disposé entre chaque embout 1 et la bague de verrouillage 3 qui lui est associée, de façon à assurer le contact des deux faces optiques 32.

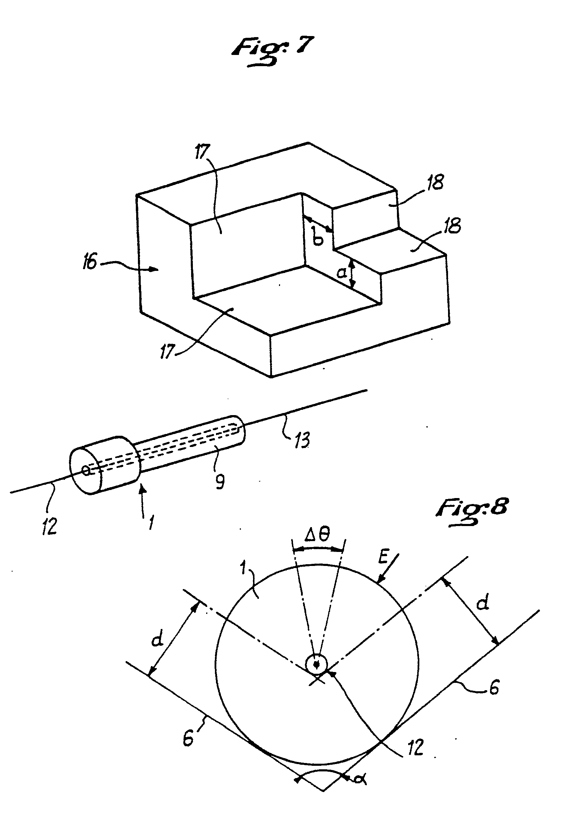

La figure 7 représente le procédé grâce auquel la fibre 12 peut être mise en place dans le perçage 11 de l'embout mâle 1.

Un gabarit 16 comporte deux premières surfaces planes 17 qui forment entre elles un dièdre d'une valeur sensiblement égale à celle du dièdre formé par les surfaces 6 du raccord femelle 2.

Le gabarit 16 comporte deux autres surfaces 18, qui sont chacune parallèle à l'une des surfaces 17. Les distances a et b séparant des deux surfaces 18 des deux surfaces 17, sont respectivement égales à la distance entre la surface de la gaine optique 13 et chacune des surfaces 6. Dans le mode de réalisation représenté, où la fibre doit être mise en place sur l'embout 1 de façon à être coaxiale à cet embout, on comprendra que les deux distances a et b sont toutes deux égales au rayon de la partie cylindrique 9 de l'embout mâle 1, diminué du rayon de la gaine optique 13 de la fibre 12.

La gabarit 16 comporte par ailleurs un moyen d'orientation angulaire non représenté, qui peut par exemple être identique à celui du raccord femelle 2.

L'embout 1 est placé sur le gabarit avec sa surface cylindrique 9 maintenue en contact avec les surfaces 17, par exemple à l'aide des mêmes moyens qui permettent de la maintenir en contact avec les surfaces 6 du raccord femelle 2. L'extrémité de la fibre optique 12 est alors engagée dans le perçage 11 de l'embout 1 de sorte que la gaine optique 13 vienne en appui sur les surfaces 18 où il est maintenu par tout moyen convenable.

Une résine polymérisable est alors injectée entre la fibre et les parois du perçage 11 de l'embout 1 et, lorsque cette résine est polymérisée, l'embout peut être retiré du gabarit et la gaine optique 13 de la fibre est sectionnée au ras du perçage de cet embout.

On constate par conséquent, que ce procédé permet d'assurer le positionnement convenable de la fibre optique dans l'embout 1, de sorte que lorsque deux embouts sont placés dans le raccord femelle 2, les deux fibres sont positionnées de façon parfaite par rapport aux deux surfaces 6 de l'orifice de l'embout 2, et sont par conséquent, parfaitement alignées.

Les seules cotes devant avoir une très grande précision sont les cotes a et b du gabarit. Cette précision peut être assurée de façon tout à fait satisfaisante en utilisant comme surface 18, des surfaces de cales étalons d'épaisseur fixées sur des prolongements des surfaces 17.

Les figures 4 à 6 représentent le second mode de réalisation du connecteur selon l'invention.

Comme précédemment, le connecteur comporte deux embouts mâles 21, susceptibles d'être verrouillés sur un raccord femelle 22, à l'aide de bagues de verrouillage 23. Dans la présente forme de réalisation, l'orifice du raccord femelle est un alésage cylindrique 24, comme représenté à la figure 5. Dans cet alésage cylindrique, est disposée une pièce en tôle 25, découpée et pliée comme représentée en perspective à la figure 6.

La pièce 25 comporte une partie cylindrique 26, dans laquelle sont découpées deux languettes 27, qui sont déportées du côté concave de la partie cylindrique 26 pour former deux lames de ressort susceptibles de coopérer avec les embouts 21, comme cela sera décrit plus en détail ci-après. A l'opposé des languettes 27, la pièce 25 est pliée pour former deux surfaces planes 28, formant à l'intérieur de la pièce 25, un dièdre rentrant.

Les embouts mâles 21, dans lesquels la fibre optique 29 peut être montée comme décrit ci-dessus en référence à la figure 7, comportent une partie cylindrique 30 et un méplat 31.

Par conséquent, la pièce 25 étant disposée dans l'alésage 24 du raccord femelle 22, et un embout 21 étant engagé dans la pièce 25, la languette 27 qui vient en appui sur le méplat 31 maintient à la fois la partie cylindrique 30 de la surface de l'embout 21 en contact avec les surfaces planes 28 de la pièce 25, et bloque l'embout 21 en rotation.

Ainsi, dans cette forme de réalisation, le blocage en rotation des embouts 21 et le contact entre les parties cylindriques 30 de ces embouts avec les surfaces planes 28 du raccord femelle sont assurés simplement à l'aide de la seule pièce 25.

La figure 8 montre les différentes tolérances intervenant dans l'alignement des fibres.

On montre qu'avec un jeu angulaire de $\Delta\theta$ par l'orientation de l'embout mâle, un angle $\alpha$ entre les surfaces 6 défini à $\Delta\alpha$ près, et un diamètre E pour l'embout 1 défini à $\Delta E$ près, le mésalignement maximum $\delta$ entre les deux fibres est :

$$\delta = \Delta E \sqrt{\left(\frac{1}{\sin\dfrac{\alpha - \Delta\alpha}{2}} - \frac{1}{\sin\dfrac{\alpha + \Delta\alpha}{2}}\right)^2 + \left(\frac{\pi\,\Delta\theta}{360\sin\dfrac{\alpha}{2}}\right)^2}$$

La tolérance sur la distance d entre la fibre 12 et les surfaces 6 est, comme on l'a vu ci-dessus, négligeable grâce au procédé mis en œuvre.

**Revendications**

1. Connecteur pour fibres optiques, comportant un raccord femelle tubulaire (2) dans lequel sont ménagées deux surfaces planes (6) formant un dièdre rentrant, deux embouts mâles (1) ayant chacun une surface extérieure au moins partiellement cylindrique, susceptibles d'être engagés dans le raccord femelle et portant chacun l'extrémité d'une fibre optique (13), et des moyens d'appui pour appliquer la partie cylindrique de ladite surface extérieure de chacun desdits embouts sur les deux surfaces planes formant dièdre rentrant du raccord femelle, avec l'axe de ladite partie cylindrique sensiblement parallèle à l'arête du dièdre, caractérisé par le fait que lesdits moyens d'appui comprennent, d'une part, un organe élastique (10) longitudinal solidaire de chacun desdits embouts mâles (1) et faisant saillie de la surface extérieure de ces embouts, et d'autre part, une rainure longitudinale (5) ménagée dans le raccord femelle de manière diamétralement opposée à l'arête du dièdre formé par lesdites surfaces planes (6), ledit organe élastique (10) de chacun desdits embouts mâles coopérant avec ladite rainure (5) dudit raccord femelle en venant s'engager dedans, afin d'assurer le positionnement angulaire de l'embout mâle respectif par rapport au dièdre du raccord femelle (Fig. 1 à 3).

2. Connecteur pour fibres optiques, comportant un raccord femelle tubulaire (2) dans lequel sont ménagées deux surfaces planes (28) formant un dièdre rentrant, deux embouts mâles (1) ayant chacun une surface extérieure au moins partiellement cylindrique (30), susceptibles d'être engagés dans le raccord femelle et portant chacun l'extrémité d'une fibre optique (13), et des moyens d'appui pour appliquer la partie cylindrique de ladite surface extérieure de chacun desdits embouts sur les deux

4

surfaces planes formant dièdre rentrant du raccord femelle, avec l'axe de ladite partie cylindrique sensiblement parallèle à l'arête du dièdre, caractérisé par le fait que lesdits moyens d'appui comprennent, d'une part, deux organes élastiques (27) longitudinaux solidaires du raccord femelle (25), s'étendant chacun sur sensiblement la moitié du raccord femelle, de manière diamétralement opposée à l'arête dudit dièdre rentrant, et d'autre part, un méplat longitudinal (31) formé sur chacun desdits embouts mâles (1), opposé à ladite surface cylindrique (30), chacun desdits organes élastiques coopérant avec le méplat correspondant en venant s'appliquer dessus, afin d'assurer le positionnement angulaire de l'embout mâle respectif par rapport au dièdre du raccord femelle (Fig. 4 à 6).

3. Connecteur selon la revendication 2, caractérisé par le fait que lesdits deux organes élastiques solidaires du raccord femelle sont des ressorts à lame (27), ces ressorts à lames (27) et les deux surfaces planes (28) formant dièdre rentrant du raccord femelle étant réalisés dans une tôle (25) découpée et pliée.

4. Connecteur selon l'une quelconque des revendications 1 à 3, caractérisé par le fait que chaque embout mâle (1) comporte un conduit dans lequel la fibre optique peut être introduite avec jeu et scellée.

5. Connecteur selon la revendication 4, caractérisé par le fait que ledit conduit est un perçage réalisé sensiblement sur l'axe de la partie cylindrique de la surface extérieure de l'embout mâle.


## Claims

1. A connector for optical fibres, including a tubular female coupling (2) in which are arranged two plane surfaces (6) forming a re-entrant dihedron, two male ferrules (1) each having an at least partially cylindrical outer surface and capable of being engaged in the female coupling and each carrying the end of one optical fibre (13), and means of support for applying the cylindrical portion of the said outer surface of each of the said ferrules against the two plane surfaces forming a re-entrant dihedron in the female coupling, with the axis of the said cylindrical portion substantially parallel with the intersection of the dihedron, characterized by the fact that the said means of support comprise firstly a longitudinal resilient member (10) integral with each of the said male ferrules (1) and projecting from the outer surface of the said ferrules and secondly a longitudinal groove (5) arranged in the female coupling diametrically opposite the intersection of the dihedron formed by the said plane surfaces (6), the said resilient member (10) on each of the said male ferrules cooperating with the said groove (5) in the said female coupling by becoming engaged in it in order to ensure the angular positioning of the respective male ferrule with respect to the dihedron in the female coupling (Figures 1 to 3).

2. A connector for optical fibres, including a tubular female coupling (2) in which are arranged two plane surfaces (28) forming a re-entrant dihedron, two male ferrules (1) each having an at least partially cylindrical outer surface (30) and capable of being engaged in the female coupling and each carrying the end of one optical fibre (13), and means of support for applying the cylindrical portion of the said outer surface of each of the said ferrules against the two plane surfaces forming a re-entrant dihedron in the female coupling, with the axis of the said cylindrical portion substantially parallel with the intersection of the dihedron, characterized by the fact that the said means of support comprise firstly two longitudinal resilient members (27) integral with the female coupling (25) and each extending along substantially half of the female coupling diametrically opposite the intersection of the said re-entrant dihedron, and secondly a longitudinal flat (31) formed upon each of the said male ferrules (1) opposite the said cylindrical surface (30), each of the said resilient members cooperating with the corresponding flat by becoming applied against it in order to ensure the angular positioning of the respective male ferrule with respect to the dihedron in the female coupling (Figures 4 to 6).

3. A connector as in Claim 2, characterized by the fact that the said two resilient members integral with the female coupling are leaf springs (27), the said leaf springs (27) and the two plane surfaces (28) forming a re-entrant dihedron in the female coupling being produced from one cut and bent sheet metal piece (25).

4. A connector as in any one of the Claims 1 to 3, characterized by the fact that each male ferrule (1) includes a duct into which the optical fibre may be introduced with clearance and sealed.

5. A connector as in Claim 4, characterized by the fact that the said duct is a hole drilled substantially along the axis of the cylindrical portion of the outer surface of the male ferrule.


## Patentansprüche

1. Verbindung für optische Fasern, welche eine ringförmige Muffe (2), in der zwei ebene ein V-förmig zurückspringendes Dieder bildende Flächen (6) vorgesehen sind, und zwei bolzenförmige Teile (1) aufweist, von denen jedes eine zumindest teilweise zylindrische Außenfläche aufweist und in die Muffe einsetzbar ist, wobei jedes bolzenförmige Teil das Ende einer optischen Faser (13) trägt, wobei Mittel vorgesehen sind, die den zylindrischen Bereich der Außenfläche jedes der bolzenförmigen Teile gegen die ebenen Flächen zum Anliegen bringt, die das V-förmige Dieder der Muffe bilden, und wobei die Achse des zylindrischen Bereiches im wesentlichen parallel zur Linie der V-Spitze des Dieders verläuft, dadurch gekennzeichnet, daß die die Anlage bewirkenden Mittel einerseits aus einem longitudinalen elastischen Organ (10), das mit dem zugehörigen bolzenförmigen Teil (1) verbunden ist und von dessen Außenfläche absteht, sowie einer Längsrille (5) besteht, die in die Muffe so eingelassen ist, daß sie diametral der V-Spitze des Dieders gegenüberliegt, die von den ebenen Flächen gebildet wird, wobei das elastische Organ (10) jedes der bolzenförmigen Teile mit der Rille (5) der Muffe zusammenwirkt, indem sie in diese eingreift, um die Winkelstellung des bolzenförmigen Teils in bezug auf das Dieder der Muffe festzulegen.

2. Verbindung für optische Fasern, welche eine ringförmige Muffe (2), in der zwei ebene ein V-förmig zurückspringendes Dieder bildende Flächen (28) vorgesehen sind, und zwei bolzenförmige Teile (1) aufweist, von denen jedes eine zumindest teilweise zylindrische Außenfläche (30) aufweist und in die Muffe einsetzbar ist, wobei jedes bolzenförmige Teil das Ende einer optischen Faser (13) trägt, wobei Mittel vorgesehen sind, die den zylindrischen Bereich der Außenfläche jedes der bolzenförmigen Teile gegen die ebenen Flächen zum Anliegen bringt, die das V-förmige Dieder der Muffe bilden, und wobei die Achse des zylindrischen Bereiches im wesentlichen parallel zur Linie der V-Spitze des Dieders verläuft, dadurch gekennzeichnet, daß die die Anlage bewirkenden Mittel einerseits aus zwei longitudinalen elastischen Organen (27), die mit der Muffe (25) verbunden sind, wobei sich jedes Organ im wesentlichen über die Hälfte der Muffe diametral gegenüberliegend zur Linie der V-Spitze des Dieders erstreckt, und andererseits aus einer longitudinalen Abflachung (31) bestehen, die auf der Seite, die der zylindrischen Fläche gegenüberliegt, gebildet ist, um die Winkelstellung des bolzenförmigen Teils in bezug auf das Dieder der Muffe festzulegen (Fig. 4-6).

3. Verbindung nach Anspruch 2, dadurch gekennzeichnet, daß die beiden mit der Muffe verbundenen elastischen Organe Blattfedern sind, wobei die Blattfedern (27) und die beiden ebenen Flächen, die das V-förmig zurückspringende Dieder bilden, aus einem aufgeschnittenen und gebogenen Blech (25) bestehen.

4. Verbindung nach einem der Ansprüche 1 bis 3, dadurch gekennzeichnet, daß jedes bolzenförmige Teil (1) einen Kanal aufweist, in dem die optische Faser mit Spiel eingeführt und versiegelt werden kann.

5. Verbindung nach Anspruch 4, dadurch gekennzeichnet, daß der Kanal eine Bohrung darstellt, die im wesentlichen in der Achse des zylindrischen Teils der Außenfläche des bolzenförmigen Teils verläuft.

0 045 271

*Fig.1*

*Fig.2*

*Fig.6*

1

*Fig: 3*

*Fig: 4*

*Fig: 5*

0 045 271

Fig. 7

Fig. 8